(19) Europäisches Patentamt

European Patent Office

Office européen des brevets

(11) **EP 4 386 057 A1**

(12) **EUROPEAN PATENT APPLICATION**

(43) Date of publication:
**19.06.2024  Bulletin 2024/25**

(21) Application number: **23189870.1**

(22) Date of filing: **04.08.2023**

(51) International Patent Classification (IPC):
*C09D 133/08* (2006.01)     *C08F 265/06* (2006.01)
*C08F 212/08* (2006.01)     *C08F 257/02* (2006.01)
*C08F 2/22* (2006.01)

(52) Cooperative Patent Classification (CPC):
(C-Sets available)
**C09D 133/08; C08F 220/14; C08F 220/1804;
C08F 257/02; C08F 265/06;** C08F 2/22;
C08F 212/08                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022  EP 22214092**

(71) Applicant: **Organik Kimya Sanayi Ve Tic. A.S.
34075 Istanbul (TR)**

(72) Inventors:
• **Moscatelli, Davide
34075 KEMERBURGAZ (TR)**
• **Ergun Ersen, Nur Basak
34075 KEMERBURGAZ (TR)**
• **Demiray, Mehmet
34075 KEMERBURGAZ (TR)**

(74) Representative: **Plasseraud IP
66, rue de la Chaussée d'Antin
75440 Paris Cedex 09 (FR)**

(54) **WATERBORNE POLYMER COMPOSITION AND PREPARATION METHOD THEREOF**

(57)     The present invention relates to waterborne polymer compositions comprising a polymer obtained with recycled monomers, said recycled monomers being recycled styrene comprising specific chemical compounds at specific levels. The present invention also relates to a process for producing said polymer composition. The use of the waterborne polymer compositions in coating, paint, primer, ink, pressure sensitive adhesive, textile and leather additive, paper additive, constructions additive, or varnish is also a part of the present invention.

**EP 4 386 057 A1**

**(Cont. next page)**

(52) Cooperative Patent Classification (CPC): (Cont.)

C-Sets
**C08F 220/14, C08F 220/1802, C08F 220/06,**
**C08F 222/102;**
**C08F 220/1804, C08F 220/14, C08F 220/1802,**
**C08F 220/06, C08F 220/56;**
**C08F 257/02, C08F 212/08;**
**C08F 257/02, C08F 212/08, C08F 220/06;**
**C08F 265/06, C08F 220/1808, C08F 220/14,**
**C08F 220/1802;**
C08F 212/08, C08F 220/06

**Description**

**Technical domain of the invention**

The present invention relates to waterborne polymer compositions comprising a polymer obtained with recycled monomers, said recycled monomers being recycled styrene and comprising specific chemical compounds at specific levels. The present invention also relates to a process for producing said polymer composition. The use of the waterborne polymer compositions in coating, paint, primer, ink, pressure sensitive adhesive, textile and leather additive, paper additive, constructions additive, or varnish is also a part of the present invention.

**Background of the invention**

One of the most important challenges of the 21st century is reducing the amount of residues produced by humans. Plastic and polymer production has grown faster than any other material since the 1950s. Polymers can be recycled but only a small part of plastic and polymer is effectively recycled. For some compound the recycling process is well-known and efficient at industrial scale.

Therefore, it is desirable to use recycled monomer to produce more sustainable polymers. But generally, the recycling process produce recycled monomer comprising high level of impurities, generally higher than in the corresponding virgin monomer.

The problem is that the impurities present in the recycled monomers, especially when their concentration is high, affects the technical performances of the polymer made with said recycled monomers. More the impurity level is high, higher is the deterioration of the performances of the resulting polymer. The reason is that the impurities are harmful to the polymerization of monomers.

To solve this problem the recycling process of polymers includes a purification step to avoid the contamination of recycled monomer with impurities and to decrease as much as possible the level of impurities contained in the recycled monomer. Different purification processes have been developed to reach this goal. But the purification process represents an additional step in the recycling process that induces cost increase and energy consumption.

It is desirable to find new solutions for example improved depolymerization process allowing the production of recycled monomers having the same purity, in other terms the same low level of impurities, as the virgin monomers.

Nevertheless, the problem of high level of impurity is still a problem for the reuse of recycled monomers because the impurities deteriorate the technical performances of the polymers.

It would therefore have been expected that the polymerization of recycled monomers comprising a high level of impurities, for example because not purified, would lead to polymers with degraded properties.

However, against all expectations, the Applicant has discovered that it was possible to use recycled monomers, preferably recycled styrene containing a substantial amount of specific impurities at specific levels, to obtain polymers having substantially the same performances, and in some extend better performances, when compared to polymers obtained with virgin monomers.

**Summary of the invention**

The present invention relates to a waterborne polymer composition comprising a polymer obtained from recycled styrene containing specific impurity at specific level. The present invention also relates to a process for producing a waterborne polymer composition with said recycled styrene, preferably by emulsion polymerization, more preferably by multistage emulsion polymerization. The invention also relates to the use of said composition in coating, textile, pressure sensitive adhesive, construction, and leather applications.

**Detailed description of the invention**

The present invention relates to a waterborne polymer composition comprising a polymer obtained from 1 to 100% by weight of at least one recycled monomer, wherein said recycled monomer is recycled styrene, or its dimer, or its trimer, and comprises from 10 ppm to 3.000 ppm by weight of benzene.

Generally, the recycling of polystyrene leads to the production of about 60-65 % by weight of styrene, 20-25% by weight of its dimers and 10-15% by weight of its trimers. The expression "recycled styrene, or its trimer, or its dimer" means that the recycled styrene may comprises a mixture of recycled styrene, in combination with its recycled dimer and/or trimer. This combination, or composition depends on the recycling process.

The waterborne polymer composition is preferably an emulsion in which the polymer is present in particulates form in dispersion in an aqueous medium. The waterborne polymer composition preferably comprises from 0.3 to 67 % by weight, more preferably from 1.5 to 50%, even more preferably from 5 to 30 % by weight of polymer of the invention obtained from at least recycled styrene comprising from 10 ppm to 3.000 ppm by weight of benzene.

The invention concerns a process for producing a waterborne polymer composition by emulsion polymerization comprising the polymerization from 1 to 100% by weight of at least one recycled monomer, wherein said recycled monomer is recycled styrene, or its dimer, or its trimer, and comprises from 10 ppm to 3.000 ppm by weight of benzene. The emulsion may be a single stage polymerization or a multistage polymerization. The emulsion polymerization is preferably a multistage emulsion polymerization.

According to the invention, it is surprisingly possible to obtain polymer emulsion with recycled styrene, without affecting the performances of the polymer, especially in certain technical domain such as coating. It is therefore possible to obtain polymers having satisfactory performances, and in some extend better performances, even with recycled styrene comprising a high level of specific impurities.

The present invention proposes a new way to obtain good performances polymers made with recycled styrene, with the possibility to avoid an additional step to decrease the impurity levels in said recycled styrene.


The recycled monomer

The general term "recycled monomers" as used herein and throughout the specification is intended to refer to the recovered monomers from recycling process, generally after the recycling process of a polymer.

In the present invention, the at least one recycled monomer is recycled styrene that comprises specific impurities present in a specific amount.

The recycled styrene, or its dimer, or its trimer comprises from 10 ppm to 3.000 ppm by weight of benzene, preferably from 20 ppm to 1.500ppm, more preferably from 50 ppm to 1.000 ppm, even more preferably from 100 ppm to 800 ppm, even more preferably from 200 ppm to 600 ppm.

The recycled styrene, or its dimer, or its trimer also preferably comprises from 10 ppm to 3.000 ppm by weight of toluene, preferably from 20 ppm to 1.500 ppm, more preferably from 50 ppm to 1.000 ppm, even more preferably from 100 ppm to 800 ppm, even more preferably from 200 ppm to 600 ppm.

The recycled styrene, or its dimer, or its trimer also preferably comprises from 1 ppm to 25.000 ppm by weight of ethylbenzene, preferably from 20 ppm to 15.000 ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

The recycled styrene, or its dimer, or its trimer also preferably comprises from 1 ppm to 25.000 ppm by weight of cumene, preferably from 20 ppm to 15.000 ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

The recycled styrene, or its dimer, or its trimer also preferably comprises from 1 ppm to 25.000 ppm by weight of alpha-methyl styrene, preferably from 20 ppm to 15.000 ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

The recycled styrene, or its dimer, or its trimer also preferably comprises from 1 ppm to 5.000 ppm by weight of 1,3-diphenylpropane, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene, or its dimer, or its trimer also preferably comprises from 1 ppm to 5.000 ppm by weight of 2,4-diphenyl-1-butene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene, or its dimer, or its trimer also preferably comprises from 1 ppm to 5.000 ppm by weight of 2,4,6-triphenyl-1-hexene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene, or its dimer, or its trimer also preferably comprises from 1 ppm to 5.000 ppm by weight of xylene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene, or its dimer, or its trimer also preferably comprises from 1 ppm to 5.000 ppm by weight of isopropenyl benzene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene or its dimer or its trimer preferably comprises 10 ppm to 3.000 ppm by weight of benzene, and at least one compound, preferably at least two, more preferably at least three, more preferably at least four, more preferably at least five, even more preferably at least six, even more preferably at least seven, even more preferably at least height compounds selected from the list comprising toluene, ethylbenzene, cumene, alpha-methyl styrene, 1,3-diphenylpropane, 2,4-diphenyl-1-butene, 2,4,6-triphenyl-1-hexene, xylene, isopropenyl benzene the amount of said compounds being selected from the respecify ranges described above.

The recycled styrene or its dimer or its trimer preferably comprises 10 ppm to 3.000 ppm by weight of benzene, and from 10 ppm to 3.000 ppm by weight of toluene, from 1 ppm to 25.000 ppm by weight of ethylbenzene, from 1 ppm to 25.000 ppm by weight of cumene, from 1 ppm to 25.000 ppm by weight of alpha-methyl styrene, from 1 ppm to 5.000 ppm by weight of 1,3-diphenylpropane, from 1 ppm to 5.000 ppm by weight of 2,4-diphenyl-1-butene, from 1 ppm to 5.000 ppm by weight of xylene, from 1 ppm to 5.000 ppm of isopropenyl benzene and from 1 ppm to 5.000 ppm by weight of 2,4,6-triphenyl-1-hexene.

The determination of the amount of impurities in the recycled monomers is made by gas chromatography analysis. A non-limiting example of gas chromatography device that can be used for this purpose is Agilent 7890B with headspace Agilent 7697A and mass detector Agilent 5977B. The skilled man of the art knows how to determine the amount of an impurity in a sample with known gas chromatography method.

The recycled styrene is generally obtained via chemical recycling of polystyrene (PS).

Thermal cracking or pyrolysis process including the degradation of the polymeric material by heating under inert atmosphere is employed in chemical recycling of PS. Thermal decomposition of PS to styrene takes place at temperatures above ceiling temperature where the rate of propagation is equal to the rate of depropagation.

The recycled styrene is obtained by a recycling process, generally after the recycling process of a polymer. In the present invention, the recycled styrene is preferably obtained by a recycling process that does not comprise a purification step. In the present invention the term "purification step" means an additional process step in which the amount of impurities present in the recycled styrene is decreased compare to the amount of impurities present in the recycled styrene directly obtained from the recycling process, for example the depolymerization of polymers.

In other terms the recycled styrene used in the present invention is preferably not purified in a purification step. The recycled monomer used in the invention preferably comprises the impurities present at the end of the recycling process, and without an additional purification step.

The polymer

The polymer of the invention is preferably obtained:

- from 1 to 100 % by weight of at least one recycled styrene, or its dimer, or its trimer, comprising from 10 ppm to 3.000 ppm by weight of benzene;
- optionally from 0.1 to 50% by weight of at least one additional monomer;
- optionally from 0.1 to 50% by weight of at least one biobased monomer.

The polymer of the invention is preferably obtained:

- from 1 to 99.9 % by weight of at least one recycled styrene, or its dimer, or its trimer, comprising from 10 ppm to 3.000 ppm by weight of benzene;
- from 0.1 to 50% by weight of at least one additional monomer;
- optionally from 0.1 to 50% by weight of at least one biobased monomer.

The polymer of the invention is preferably obtained:

- from 1 to 99.8 % by weight of at least one recycled styrene, or its dimer, or its trimer comprising from 10 ppm to 3.000 ppm by weight of benzene;
- from 0.1 to 50% by weight of at least one additional monomer;
- from 0.1 to 50% by weight of at least one biobased monomer having a biobased carbon content between 10% by weight and 100% by weight relative to the total weight of carbon of said monomer, the biobased carbon content being measured according to ASTM D6866-22 Standard.

The polymer of the invention is preferably obtained from 2,5 to 95% of at least a recycled styrene or its dimer or its trimer, more preferably from 5 to 85%, even more preferably from 10 to 80 %, even more preferably from 15 to 70% by weight.

The recycled styrene may also preferably comprise at least one other impurity from the following list: list toluene, ethylbenzene, cumene, alpha-methyl styrene, 1,3-diphenylpropane, 2,4-diphenyl-1-butene, 2,4,6-triphenyl-1-hexene, xylene, isopropenyl benzene, the amount of said impurity being selected from the respecify ranges described above.

The waterborne polymer composition may contain from 5 to 1000 ppm of benzene. It may contain from 5 to 1000 ppm of toluene. It may contain from 1 to 18800 ppm of ethylbenzene. It may contain from 1 to 18800 ppm of cumene. It may contain from 1 to 18800 ppm of alpha-methyl sytrene. It may contain from 1 to 3800 ppm of 1,3-diphenylpropane. It may contain from 1 to 3800 ppm of 2,4-diphenyl-1-butene. It may contain from 1 to 3800 ppm of 2,4,6-triphenyl-1-hexene. It may contain from 3 to 1500 ppm of xylene. It may contain from 1 to 3800 ppm of isopropenyl benzene.

When the waterborne composition is the polymer itself, also called the final polymer. The final polymer of the waterborne polymer composition may contain from 5 to 1000 ppm of benzene. The final polymer may contain from 5 to 1000 ppm of toluene. The final polymer may contain from 1 to 18800 ppm of ethylbenzene. The final polymer may contain from 1 to 18800 ppm of cumene. The final polymer may contain from 1 to 18800 ppm of alpha-methyl sytrene. The final polymer may contain from 1 to 3800 ppm of 1,3-diphenylpropane. The final polymer may contain from 1 to 3800 ppm of 2,4-diphenyl-1-butene. The final polymer may contain from 1 to 3800 ppm of 2,4,6-triphenyl-1-hexene. The final polymer may contain from 3 to 1500 ppm of xylene. The final polymer may contain from 1 to 3800 ppm of isopropenyl benzene.

The polymer of the invention may also comprise a second recycled monomer, preferably a recycled methyl methacrylate comprising from 200 ppm to 30.000 ppm by weight of methyl isobutyrate. The recycled methyl methacrylate may also advantageously comprise from 1 ppm to 15.000 ppm by weight of comprises methylacrylate, and/or from 100 ppm to 10.000 ppm by weight of methyl propanoate, and/or from 1 ppm to 15.000 ppm by weight of ethyacrylate, and/or from 1 ppm to 15.000 ppm by weight of methyl pivalate.

The polymer of the invention is preferably obtained from 5% to 97.5% by weight of at least one additional monomer, more preferably from 30% to 85% by weight.

According to the invention, additional monomers mays be chosen from the list comprising ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)- acrylate, tetrahydrofurfuryl(meth)acrylate, methoxyethoxyethyl(meth)-acrylate, 1-butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1-ethoxybutyl(meth)acrylate, 1 -ethoxyethyl-(meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy-butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

In a preferred mode, the least one additional monomer is carboxyl functional monomer, said carboxyl functional monomer being preferably chosen from the group comprising acrylic acid, methacrylic acid, crotonic acid, maleic acid, itaconic acid, mesaconic acid, fumaric acid, methylenemalonic acid, citraconic acid or mixtures thereof.

The polymer of the invention is preferably obtained from 0 to 70% by weight of at least one biobased monomer, more preferably from 5 to 50% by weight.

According to the invention, the biobased monomer is at least partially of renewable and non-fossil sources. According to the invention, the expression "at least partly of renewable and non-fossil sources" means that the biobased monomer has a biobased carbon content preferably between 10% by weight and 100% by weight relative to the total weight of carbon of said monomer.

The biobased carbon content is measured according to ASTM D6866-22 Standard.

In the context of the invention, the ASTM D6866-22 standard is used to characterize the biobased nature of a chemical compound, and to determine the biobased carbon content of said compound. The value is expressed as a percentage by weight of biobased carbon relative to the total weight of carbon in said compound.

ASTM D6866-22 is a test method that teaches how to experimentally measure the bio-based carbon content of solids, liquids, and gaseous samples by radiocarbon analysis.

This standard mainly uses the technology of the AMS (Accelerator Mass Spectrometry). This technique is used to naturally measure the radionuclides present in a sample, in which the atoms are ionized, then accelerated to high energies, then separated, and individually counted in Faraday collectors. This high-energy separation is extremely effective at filtering out isobaric interference, so the AMS is able to accurately measure the abundance of carbon-14 by compared to carbon 12 (14C/12C) to an accuracy of 1.10<sup>-15</sup>.

This standard makes it possible to directly distinguish carbon atoms from contemporary carbon from carbon atoms of fossil origin.

The biobased monomer has preferably a biobased carbon content comprised between 20% by weight and 100% by weight relative to the total weight of carbon of said monomer, more preferably more than 30%, even more preferably more than 50%, even more preferably more than 70%, even more preferably more than 90% by weight. In a preferred mode of the invention the biobased monomer has a biobased carbon content of 100% by weight.

The biobased monomer is preferably chosen from the list comprising ethyl acrylate, lauryl (meth)acrylate, isobornyl (meth)acrylate, tetrahydrafurfuyl (meth)acrylate, stearyl acrylate, n-octyl acrylate, n-butyl methacrylate, methyl methacrylate, vanillin methacrylate, neopentyl glycol diacrylate, trimethyloyl propane triacrylate, pentaerythritol tetraacrylate, dipentaerythritol pentaacrylate.

The biobased monomer is more preferably ethylacrylate, lauryl (meth)acrylate, or a mixture thereof.

The polymer of the waterborne polymer composition of the invention has preferably a weight average molecular weight within the range of 100.000 to 20 million Daltons, preferably within the range of 200.000 to 10 million, more preferably within the range of 500.000 to 5 million Daltons.

The weight average molecular weights of polymeric stabilizers are determined by Gel Permeation Chromatography (GPC). It is for example determined using a device such as Jasco 2000 series Gel Permeation Chromatography (GPC) coupled with differential refractive index detector and following the exemplified but not limiting method. The sample is dissolved in THF at a concentration of 5 mg/mL and filtered through 0.45 $\mu$m PTFE filter. 30 $\mu$L of the polymer solution are injected into the system. The separation is performed in THF at a constant flow rate of 1 mL/min and at 40 °C using three styrene-divinyl benzene columns (300 mm x 8 mm I.D.) in series each with particle size of 5 $\mu$m and porosity of 1000, 100000 and 1000000 Å, respectively. A guard column (30 mm x 8 mm) with particle size of 5 $\mu$m is included before the analytical columns. Calibration is performed using a series of polystyrene standards from 580 to 3'200'000 g/mol. The molar masses obtained are either an interpolation or an extrapolation from the calibration curve.

Emulsion Polymerization process

The waterborne polymer composition is preferably obtained by emulsion polymerization. The waterborne polymer composition is preferably an emulsion. The waterborne polymer composition preferably comprises from 0.3% to 67% % by weight of polymer obtained from at least recycled styrene comprising from 10 ppm to 3.000 ppm by weight of benzene.

The Applicant has discovered that this method of polymerization is particularly advantageous to obtain polymers with recycled styrene containing a substantial amount of specific impurities at specific levels, said polymers having substantially the same performances and properties than the polymers made with virgin monomers, and in some extend better performances.

Emulsion polymerization is a type of free radical polymerization process which generally starts with an emulsion incorporating water, at least one monomer and at least one surfactant. The polymerization is generally initiated with a polymerization initiator. The resulting polymers produced in such a way are polymer particles dispersed in the water phase.

By emulsion polymerization we preferably exclude the inverse emulsion polymerization.

In the emulsion polymerization process described hereafter, the recycled styrene or its dimer, or its trimer, comprises from 10 ppm to 3.000 ppm by weight of benzene, and may also preferably comprises at least one other impurity form the following list: list toluene, ethylbenzene, cumene, alpha-methyl styrene, 1,3-diphenylpropane, 2,4-diphenyl-1-butene, 2,4,6-triphenyl-1-hexene, xylene, isopropenyl benzene, the amount of said impurity being selected from the respecify ranges described above.

The waterborne Polymer composition of the invention is preferably obtained by an emulsion polymerization process comprising:

a. Preparing a mixture comprising at least one surfactant and/or at least one polymeric stabilizer, and at least one recycled styrene, or its dimer, or its trimer, comprising from 10 ppm to 3.000 ppm by weight of benzene;
b. Initiating the polymerization;
c. Obtaining a polymer emulsion.

In a first aspect of the invention, the emulsion polymerization is made in the presence of at least one surfactant.

According to this first aspect, the waterborne polymer composition of the invention is preferably obtained by a multistage emulsion polymerization process comprising:

a. a first stage comprising the polymerization of a mixture comprising:

i. water;
ii. at least one surfactant;
iii. at least one ethylenically unsaturated monomer;
iv. at least one recycled monomer;
v. optionally at least one carboxyl functional monomer;
vi. optionally at least one crosslinking functional or multi-ethylenically unsaturated monomer;

b. a second stage in which the polymer of the waterborne polymer composition is obtained by polymerizing:

i. at least the product obtained in the first stage;
ii. at least one surfactant;
iii. at least one ethylenically unsaturated monomer;
iv. optionally at least one recycled monomer;
v. optionally at least one crosslinking functional or multi-ethylenically unsaturated monomer;

Wherein said recycled monomer is recycled styrene or its dimer, or its trimer, and comprises from 10 ppm to 3.000 ppm by weight of benzene.

According to this first aspect, the waterborne polymer composition of the invention may also be preferably obtained by a multistage emulsion polymerization process comprising:

a. a first stage comprising the polymerization of a mixture comprising:

i. water;
ii. at least one surfactant;
iii. at least one ethylenically unsaturated monomer;
iv. optionally at least one recycled monomer;
v. optionally at least one carboxyl functional monomer;
vi. optionally at least one crosslinking functional or multi-ethylenically unsaturated monomer;

b. a second stage in which the polymer of the waterborne polymer composition is obtained by polymerizing:

i. at least the product obtained in the first stage;
ii. at least one surfactant;
iii. at least one recycled monomer;
iv. optionally at least one crosslinking functional or multi-ethylenically unsaturated monomer;

Wherein said recycled monomer is recycled styrene or its dimer, or its trimer, and comprises from 10 ppm to 3.000 ppm by weight of benzene.

In a preferred mode of this first aspect, at least one crosslinking functional or multi-ethylenically unsaturated monomer is used in the second stage.

In a preferred mode of this first aspect, at least one recycled styrene, or its dimer, or its trimer, comprising from 10 ppm to 3.000 ppm by weight of benzene is used in the first stage, and at least one recycled styrene, or its dimer, or its trimer, comprising from 10 ppm to 3.000 ppm by weight of benzene is used in the second stage.

In this aspect of the invention, at least one ethylenically unsaturated monomer may be advantageously used in the second stage.

These preferred modes may be combined.

The surfactant may be an anionic, non-ionic, cationic, zwitterionic and polymerizable surfactant, especially selected from the group consisting of anionic organic sulfates and sulfonates and non-ionic alkylene oxides, especially ethylene and/or propylene oxides and combinations thereof, preferably selected from the group consisting of organic sulfonates, particularly dodecyl diphenyloxide disulfonates, more particularly sodium dodecyl sulfate, and polymerizable surfactants (surfmers), especially (meth)acrylate, allyl, alkyl, styrenic, maleate, fumarate, crotonate, allyloxy and acrylamide functional groups containing anionic and non-ionic polymerizable surfactants, preferably, ammonium polyoxyalkylene alkenylether sulfates (e.g. Latemul PD-104, Kao Corporation), phosphate esters of polyalkylene monomethacrylates (e.g. Sipomer PAM 200, Solvay), polyoxyethylene styrenated propenyl phenyl ether sulfate ammonium salts (e.g. HITENOL AR series, DKS surfactants), polyoxyethylene-1 - (allyloxymethyl) alkyl ether sulfate ammonium salts (e.g. HITENOL KH series, DKS surfactants), polyoxyethylene-1 -(allyloxymethyl) alkyl ethers (e.g., NOIGEN KN series, DKS surfactants), polyoxyethylene styrenated propenyl phenyl ethers (e.g., NOIGEN AN series, DKS surfactants).

Appropriate surfactants, could also be anionic surfactants, such as e.g. alkyl, alkyl phenyl or styrenated phenyl sulfates and sulfonates, especially sodium dodecyl sulfate, or polymerizable anionic surfactants containing sulfates and sulfonates together with allyl, propenyl and propenyl phenyl polymerizable groups, or polymerizable non-ionic surfactants with hydrophilic part containing ethylene oxide or propylene oxide groups or mixtures of both together with polymerizable groups like allyl, propenyl and propenyl phenyl.

Suitable cationic surfactants could be benzalkonium chloride, cetylpyridinium chloride, benzethonium chloride, alkyltrimethylammonium salts such as cetyl trimethylammonium bromide and cetyl trimethylammonium chloride, lauryl trimethyl ammonium chloride, C.C.C7-trimethyl ammonium bromides, halide salts of quaternized polyoxyethylalkylamines, dodecylbenzyl tri ethyl ammonium chloride, MIRAPOL(R) and ALKAQUATR (available from Alkaril Chemical Company) or SANIZOL(R) (benzalkonium chloride, available from Kao Chemicals),

Suitable zwitterionic surfactants could be cholamidopropyl)dimethylammonio]-1-propanesulfonate) and betaines such as cocamidopropyl betaine have a carboxylate with the ammonium.

The surfactant is preferably used at a concentration from 0.01 to 5 % by weight, more preferably from 0.05 to 2.5 % by weight, based on the total amount of monomers in said polymer.

The ethylenically unsaturated monomers preferably selected from the same list as previously described for additional monomers in "the polymer" part.

In a second aspect of the invention, the emulsion polymerization is made in the presence of at least one polymeric stabilizer.

When the emulsion polymerization is made with at least one polymeric stabilizer, said polymeric stabilizer is preferably made in the first stage of the process, and said polymeric stabilizer is preferably used in the second stage of the process.

According to this second aspect, the waterborne polymer composition of the invention is preferably obtained by a multistage emulsion polymerization process comprising:

a. a first stage in which a polymeric stabilizer is obtained by polymerizing a mixture comprising:

   i. water;
   ii. at least one carboxyl functional monomer;
   iii. optionally at least one surfactant;
   iv. optionally at least one recycled monomer;
   v. optionally at least one crosslinking functional or multi-ethylenically unsaturated monomer;

b. a second stage in which the polymer of the waterborne polymer composition is obtained by polymerizing:

   i. at least the polymeric stabilizer obtained in the first stage;
   ii. at least one recycled monomer;
   iii. optionally at least one surfactant;
   iv. optionally at least one crosslinking functional or multi-ethylenically unsaturated monomer;

Wherein said recycled monomer is recycled styrene or its dimer, or its trimer, and comprises from 10 ppm to 3.000 ppm by weight of benzene.

In a preferred mode of this aspect, at least one crosslinking functional or multi-ethylenically unsaturated monomer is used in the second stage.

In a preferred mode of this aspect, at least one surfactant is used in the first stage.

In a preferred mode of this aspect, at least one recycled styrene, or its dimer, or its trimer, comprising from 10 ppm to 3.000 ppm by weight of benzene is used in the first stage.

In a preferred mode of this aspect, at least one ethylenically unsaturated monomer is used in the first stage and/or in the second stage.

These preferred modes may be combined.

In the first stage, water content is preferably from 50 to 95% by weight, based on the total weight of said first mixture, more preferably from 60% to 80%.

In the first stage, the amount of the at least one carboxyl functional monomer amount is preferably from 1 to 60% by weight, more preferably from 2 to 40% by weight, even more preferably from 5 to 30% by weight, the percentage being based on the total amount of monomer in the first stage.

The carboxyl functional monomer is preferably chosen from the group comprising acrylic acid, methacrylic acid, crotonic acid, maleic acid, itaconic acid, mesaconic acid, fumaric acid, methylenemalonic acid, citraconic acid or mixtures thereof.

In the first stage, the amount of the at least recycled styrene is from 0% to 90%, preferably 10% to 90%, more preferably from 20 to 90%, even more preferably from 40 to 90%, even more preferably from 60 to 90% by weight, the percentage being based on the total amount of monomer in the first stage.

The amount of the at least one crosslinking functional or multi-ethylenically unsaturated monomer is from 0% to 30%, preferably 0.01% to 20%, more preferably from 0.1 to 15%, the percentage being based on the total amount of monomer in the first stage.

The crosslinking functional or multi-ethylenically unsaturated monomer is preferably chosen from the list comprising N-methylol acrylamide, N-methylolmethacrylamide, N-(alkoxymethyl)acrylamides or N-(alkoxymethyl)methacrylamides containing a C1-C6-alkyl radical, e.g. N-isobuthoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA), diacetone acrylamide (DIAAM); multiple ethylenically unsaturated comonomers such as ethylene glycol diacrylate, 1,3- butylene glycol di(meth)acrylate, 1,4-butylene glycol di(meth)acrylate, propylene glycol diacrylate, divinyl adipate, divinyl benzene, vinyl methacrylate, vinyl acrylate, allyl (meth)acrylate, diallyl maleate, diallyl phthalate, diallyl fumarate, methylenebisacrylamide, cyclopentadienyl acrylate or triallyl cyanurate.

The polymerization is preferably made in the presence of a polymerization initiator.

Suitable initiators could be, thermal polymerization initiators, redox polymerization initiators and combinations thereof, particularly inorganic and/or organic persulfates, peroxides, hydroperoxides, perbenzoates, peralkanoates, azoinitiators and combinations thereof, more preferably selected from the group consisting of inorganic and/or organic persulfates, more particularly selected from the group consisting of potassium persulfate (KPS), sodium persulfate (NaPS) and ammonium persulfate (APS).

The initiator system may, for example, be chosen among thermal initiators, redox initiators or combinations thereof, for example tert-butyl hydroperoxide, cumene hydroperoxide, tert-butyl perbenzoate, tert-butyl 2-ethyl perhexanoate, hydrogen peroxide and benzoyl peroxide. Either oil-and/or water-soluble initiators may be used. Suitable reducing agents of a redox initiator system may include compounds, such as sulfur compounds with a low oxidation state, such as sulfites, hydrogen sulfites, alkali metal bisulfites, ketone adducts of bisulfites, such as acetone bisulfite, alkali metal disulfites, metabisulfites and its salts, thiosulfates, formaldehyde sulfoxylates and its salts, reducing nitrogen compounds, such as hydroxylamines, hydroxylamine hydrosulfate and hydroxylammonium salts, polyamines and reducing sugars, such as sorbose, fructose, glucose, lactose and derivatives thereof, enediols, such as ascorbic acid and isoascorbic acid, sulfinic acids, hydroxy alkyl sulfinic acids, such as hydroxy methyl sulfinic acid and 2-hydroxy-2-sulfinactic acid and its salts. Redox initiators are typically used in combination with trace amounts of metal such as iron, for example supplied as ferrous sulfate.

The polymerization is preferably made in the presence of a chain transfer agent. This is particularly advantageous in the first stage.

Suitable chain-transfer agents could be isopropanol, mercaptoethanol, 3-mercaptopropanol, 3-mercaptopropionic acid, 1-butanethiol, 1-propanethiol, 1-prentanethiol, 2-methyl-2-propaneethiol, 1-hexanethiol, 1-octanethiol, tert-nonyl mercaptane, n-dodecyl mercaptane, tert-dodecyl mercaptane, 3-mercapto-3-methyl butanol, 1-mercapto-2-phenyl-2-ethanol, thioglycolic acid, methyl thioglycolate, n-butyl thioglycolate, 2-ethylhexyl thioglycolate, i-octyl thioglycolate, dodecyl thioglycolate, octadecyl thioglycolate, methyl-3-mercaptopropionate, butyl-3-mercaptopropionate, isooctyl-3-mercaptopropionate, isodecyl-3-mercaptopropionate, dodecyl-3-mercaptopropionate, octadecyl-3-mercaptopropionate, , 4-methylbenzene thiol, benzenethiol, 4,4'-thiobisbenzenethiol, azelaic alkyl mercaptane, tetrabromomethane and carbon tetrachloride.

The term "polymeric stabilizer (PS)" as used herein and throughout the specification refers to a type of polymeric surfactants which have generally both hydrophobic moieties and carboxylic acid functional groups. They are macromolecules used as surfactants in conventional emulsion polymerization and widely used for producing water-based latexes with improved colloidal properties. This type of an emulsion polymerization process is also referred to as supported emulsion polymerization wherein polymeric stabilizers are the support resins, according to this terminology. The support resins are used in addition to or completely replacing conventional surfactants to colloidally stabilize the growing polymer particles in the emulsion.

When the polymeric stabilizer is obtained from with recycled monomer, the expression "recycled polymeric stabilizer" (RPS) is used.

The polymeric stabilizer has preferably a weight average molecular weight within the range of 1.000 to 120.000 Daltons, preferably within the range of 5.000 to 60.000, more preferably within the range of 10.000 to 50.000, even more preferably within the range of 10.000 to 30.000 Daltons.

The weight average molecular weights of polymeric stabilizers are determined by Gel Permeation Chromatography (GPC). It is for example determined using a device such as Viscotek GPCMax, but not limiting to this specific device and following the exemplified but not limiting method. For the measurement triple -refractive index, light scattering, and viscosity- detectors can be used. In order to dissolve the polymer samples THF as solvent can be used. Molecular weight analysis with GPC instrument are performed with 5 mg/ml solutions of the polymers in Tetrahydrofuran, under a condition of eluent: tetrahydrofuran (THF) and flow rate: 1.0 mL/min. Two single-pore columns, of which exclusion limits are 400000 Da and 4000000 Da with styrene-divinylbenzene stationary phase, can be used. Polystyrene calibration samples having defined molecular weights can be used for calibration.

The polymeric stabilizer has preferably a solid content between 5 to 40% by weight, preferably between 10 and 30% by weight, more preferably between 25 and 30% by weight.

The solid content of the polymeric stabilizers is determined according to the method of ISO 3251:2019. In said method small aluminum trays (or bigger if necessary) are weighed and recorded as T1. The amount of the substance to be analyzed is weighed into already weighted tray and registered as T2. Same repeated for 3 times. Left the trays in oven at a specified time and temperature which is 20 min. and 150 °C. Trays are removed and cooled at room temperature and weighed, registered as T3. Solid content is calculated with the formula below and average of 3 trays is taken:

$$\text{Solid content } \% = (T3 - T1) / (T2 - T1) * 100$$

In the second stage, the waterborne polymer composition is preferably obtained by polymerizing from 2 to 90% by weight of the polymeric stabilizer, preferably from 2 to 65%, more preferably from 40 to 60% by weight.

The expression "from 2 to 90% by weight of the polymeric stabilizer obtained in the first stage" means that the polymeric stabilizer is the product obtained in the first stage.

In the second stage, the amount of the at least recycled styrene is preferably from 1% to 100%, preferably from 2% to 95%, more preferably from 5 to 90%, more preferably from 10 to 90%, more preferably from 20 to 90%, even more preferably from 40 to 90%, even more preferably from 60 to 90% by weight, the percentage being based on the total amount of monomer in the second stage.

In the second stage, the amount of the at least one carboxyl functional monomer amount is preferably from 0.1 to 60% by weight, more preferably from 1 to 40% by weight, even more preferably from 5 to 30% by weight, the percentage being based on the total amount of monomer in the second stage.

The carboxyl functional monomer is preferably chosen from the group comprising acrylic acid, methacrylic acid, crotonic acid, maleic acid, itaconic acid, mesaconic acid, fumaric acid, methylenemalonic acid, citraconic acid or mixtures thereof.

The polymeric stabilizer obtained in the first stage is preferably neutralized with at least one neutralizing agent to a pH value in between the range from 7 to 11. Generally, the resulting neutralized polymeric stabilizer is transparent or semitransparent. In the present invention, the term "semitransparent" means that a solution of the polymeric stabilizer of 2.5% by weight has a value below 35% when measured with light scattering test method.

In the second stage of the multistage emulsion polymerization, the polymerization is preferably made in the presence of a polymerization initiator.

In the second aspect of the invention previously described the polymerization in the first stage and in the second stage are preferably made in the presence of at least one polymerization initiator.

In the two previous aspects of the invention previously described, the flow of the polymerization initiator preferably ends 5 to 15 minutes after the beginning of the polymerization of the first stage and/or of the second stage.

The waterborne polymer composition of the invention can be transformed in solid particles. This can be done by drying process, for example spraydrying process. The resulting solid particles are for example water-redispersible polymer powder.

The process

The present invention also relates to process for producing a waterborne polymer composition by polymerizing at least one recycled monomer, wherein said recycled monomer is recycled styrene or its dimer, or its trimer, and comprises from 10 ppm to 3.000 ppm by weight of benzene.

The present invention also relates to process for producing a waterborne polymer composition by emulsion polymerization, by polymerizing at least one recycled monomer, wherein said recycled monomer is recycled styrene or its dimer, or its trimer, and comprises from 10 ppm to 3.000 ppm by weight of benzene.

In the process according to the invention, the recycled styrene or its dimer, or its trimer, comprises from 10 ppm to 3.000 ppm by weight of benzene, and may also preferably comprises at least one other impurity form the following list: list toluene, ethylbenzene, cumene, alpha-methyl styrene, 1,3-diphenylpropane, 2,4-diphenyl-1-butene, 2,4,6-triphenyl-1-hexene, xylene, isopropenyl benzene, the amount of said impurity being selected from the respecify ranges described above.

In the process according to the invention, the recycled styrene or its dimer, or its trimer is preferably substantially not purified during the recycling process.

The present invention relates to process for producing a waterborne polymer composition by:

- providing a polymer comprising styrene monomer unit;

- recycling said polymer in a recycling process to obtain recycled styrene or its dimer, or its trimer that comprises from 10 ppm to 3.000 ppm by weight of benzene;
- polymerizing said at least one recycled styrene obtained in said recycling process;

wherein the recycling styrene is substantially not purified during the recycling process.

In the process according to the invention, the recycled styrene or its dimer, or its trimer is preferably obtained by a recycled process that does not comprise a purification step.

The present invention relates to process for producing a waterborne polymer composition by:

- providing a polymer comprising styrene monomer unit;
- recycling said polymer in a recycling process to obtain recycled styrene or its dimer, or its trimer that comprises from 10 ppm to 3.000 ppm by weight of benzene;
- polymerizing said at least one recycled styrene obtained in said recycling process;

wherein the recycling process does not comprise a purification step.

The present invention also relates to process for producing a waterborne polymer composition by emulsion polymerization, said process comprising:

a. Preparing a mixture comprising at least one surfactant and/or at least one polymeric stabilizer, and at least one recycled monomer, wherein said recycled monomer is recycled styrene or its dimer, or its trimer, and comprises from 10 ppm to 3.000 ppm by weight of benzene;
b. Initiating the polymerization;
c. Obtaining a polymer emulsion.

In the process according to the invention, the same monomers as described in "the polymer" part may be used, at the same amount.

The present invention relates to a multistage emulsion polymerization process for producing a waterborne polymer composition, said process comprising the following successive steps:

a. Forming a first mixture comprising:

i. water;
ii. at least one surfactant;
iii. at least one ethylenically unsaturated monomer;
iv. at least one recycled monomer;
v. optionally at least one carboxyl functional monomer;
vi. optionally at least one crosslinking functional or multi-ethylenically unsaturated monomer;

b. Polymerizing said first mixture in the presence of at least one polymerization initiator;
c. Forming a second mixture comprising:

i. at least the product obtained in the step b;
ii. at least one surfactant;
iii. at least one ethylenically unsaturated monomer;
iv. optionally at least one recycled monomer;
v. optionally at least one crosslinking functional or multi-ethylenically unsaturated monomer;

d. Polymerizing said second mixture in the presence of at least one polymerization initiator to obtain the waterborne polymer composition;

wherein said recycled monomer is recycled styrene or its dimer, or its trimer, and comprises from 10 ppm to 3.000 ppm by weight of benzene.

The present invention also relates to a multistage emulsion polymerization process for producing a waterborne polymer composition, said process comprising the following successive steps:

a. Forming a first mixture comprising:

i. water;

ii. at least one surfactant;
iii. at least one ethylenically unsaturated monomer;
iv. optionally at least one recycled monomer;
v. optionally at least one carboxyl functional monomer;
vi. optionally at least one crosslinking functional or multi-ethylenically unsaturated monomer;

b. Polymerizing said first mixture in the presence of at least one polymerization initiator;
c. Forming a second mixture comprising:

i. at least the product obtained in step b;
ii. at least one surfactant;
iii. at least one recycled monomer;
iv. optionally at least one crosslinking functional or multi-ethylenically unsaturated monomer;

d. Polymerizing said second mixture in the presence of at least one polymerization initiator to obtain the waterborne polymer composition;

wherein said recycled monomer is recycled styrene or its dimer, or its trimer, and comprises from 10 ppm to 3.000 ppm by weight of benzene.

The present invention also relates to a multistage emulsion polymerization process for producing a waterborne polymer composition, said process comprising the following successive steps:

a. Forming a first mixture comprising:

i. water;
ii. at least one carboxyl functional monomer;
iii. optionally at least one surfactant;
iv. optionally at least one recycled monomer;
v. optionally at least one crosslinking functional or multi-ethylenically unsaturated monomer;

b. Polymerizing said first mixture in the presence of at least one polymerization initiator, to produce a polymeric stabilizer;
c. Neutralizing the polymeric stabilizer with at least one neutralizing agent to a pH value in between the range from 7 to 11;
d. Forming a second mixture comprising:

i. at least the neutralized polymeric stabilizer obtained in step c;
ii. at least one recycled monomer;
iii. optionally at least one surfactant;
iv. optionally at least one crosslinking functional or multi-ethylenically unsaturated monomer;

e. Polymerizing said second mixture in the presence of at least one polymerization initiator to obtain the waterborne polymer composition;

wherein said recycled monomer is recycled styrene or its dimer, or its trimer, and comprises from 10 ppm to 3.000 ppm by weight of benzene.

In the process described above, the flow of the polymerization initiator preferably ends 5 to 15 minutes after the beginning of the polymerization of step b and/or e.

The resulting polymer comprises from 1 to 100% by weight of at least one recycled monomer based on the total amount of monomers in said polymer. The same preferred ranges of recycled monomer amount as described above apply.

The first mixture of step a comprises water, preferably from 50 to 95% by weight of water, based on the total weight of said first mixture, more preferably from 60% to 80%.

The polymeric stabilizer obtained at step b has preferably a solid content from 5 to 40% by weight, preferably between 10 and 30% by weight, more preferably between 25 and 30% by weight.

Use of the waterborne polymer composition

The present invention relates to the use of the waterborne polymer composition according to the invention, or the waterborne polymer composition resulting from process of the invention, to produce coating, paint, primer, ink, varnish, pressure sensitive adhesive, and use of said waterborne polymer composition as textile polymers in finishing, in coating, in adhesive, in flocking, or in nonwoven, or as textile auxiliaries in pretreatment, in dyeing, in printing, or in finishing, or as leather additive in wet end or in finishing, or as additive in construction, or as paper additive.

The waterborne polymer composition used is preferably an emulsion. The quantity of the waterborne polymer composition of the invention used to produce above final product and in the above applications is comprised between 0.1 to 75% by weight.

The present invention also relates to a coating, paint, primer, ink, pressure sensitive adhesive, or varnish made with the waterborne polymer composition according to the invention or the waterborne polymer composition resulting from process of the invention.

The minimum film forming temperature of the waterborne polymer composition is between - 50°C and +50°C, preferably between -30°C and +30°C.

The waterborne polymer composition of the invention may be advantageously used in coating formulations such as interior or exterior paints, primers, plasters, trowel applied decorative coatings for architectural applications, also for industrial wood and metal coatings, coatings for plastic & composite surfaces, road marking paints, roof coatings, roof tile paints, seed coating, floor coatings, printings inks and overprint varnishes, pressure sensitive adhesives such as paper label adhesive, packaging tape adhesive, protective film adhesive, lamination adhesive, contact adhesive, paper tape adhesive, masking tape adhesive, film label adhesive, cold seal-heatseal adhesive, flooring adhesive, flexible packaging adhesive, tapes, protective films, packaging lamination, specialty paper, paper coating, paper impregnation binder, release binder, paper saturation binder etc., textile and leather applications such as finishing, coating, flocking, nonwoven, printing, wet end, finishing and construction applications such as waterproofing & sealing, cement modifiers, sealants, tile adhesives, dust and soil stabilization coatings, concrete ad-mixtures, and grouts, self-leveling compounds and redispersible powders.

Another object of the invention

waterborne polymer composition comprising a polymer obtained from 1 to 100% by weight of at least one recycled monomer, wherein the recycled monomer is selected from the list comprising ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)-acrylate, tetrahydrofurfuryl(meth)acrylate, methoxyethoxyethyl(meth)- acrylate, 1-butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1-ethoxybutyl(meth)acrylate, 1 -ethoxyethyl-(meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy-butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

**Claims**

1. Waterborne Polymer composition comprising a polymer obtained from 1 to 100% by weight of at least one recycled monomer, wherein said recycled monomer is recycled styrene, or its dimer, or its trimer, and comprises from 10 ppm to 3.000 ppm by weight of benzene.

2. Waterborne Polymer composition according to claim 1, wherein the recycled monomer comprises from 10 ppm to 3.000 ppm by weight of toluene.

3. Waterborne Polymer composition according to any of the previous claims, wherein the recycled monomer comprises from 1 ppm to 25.000 ppm by weight of ethylbenzene.

4. Waterborne Polymer composition according to any of the previous claims, wherein the recycled monomer comprises from 1 ppm to 25.000 ppm by weight of cumene.

5. Waterborne Polymer composition according to any of the previous claims, wherein the recycled monomer comprises from 1 ppm to 25.000 ppm by weight of alpha-methyl styrene.

6. Waterborne Polymer composition according to any of the previous claims, wherein the recycled monomer comprises from 1 ppm to 5.000 ppm by weight of 1,3-diphenylpropane.

7. Waterborne Polymer composition according to any of the previous claims, wherein the polymer is obtained:

   - from 1 to 99.9 % by weight of at least one recycled monomer;
   - from 0.1 to 50% by weight of at least one additional monomer;
   - optionally from 0.1 to 50% by weight of at least one biobased monomer.

8. Process for producing a waterborne polymer composition by polymerizing at least one recycled monomer, wherein said recycled monomer is recycled styrene or its dimer, or its trimer, and comprises from 10 ppm to 3.000 ppm by weight of benzene.

9. Process according to claim 8, wherein the polymerization is made by emulsion polymerization, said process comprising:

   a. Preparing a mixture comprising at least one surfactant and/or at least one polymeric stabilizer, and at least one recycled monomer, wherein said recycled monomer is recycled styrene or its dimer, or its trimer, and comprises from 10 ppm to 3.000 ppm by weight of benzene;
   b. Initiating the polymerization;
   c. Obtaining a polymer emulsion.

10. Process according to claim 8, wherein the polymerization is made by multistage emulsion polymerization, said process comprising the following successive steps:

    a. Forming a first mixture comprising:

       i. water;
       ii. at least one surfactant;
       iii. at least one ethylenically unsaturated monomer;
       iv. at least one recycled monomer;
       v. optionally at least one carboxyl functional monomer;
       vi. optionally at least one crosslinking functional or multi-ethylenically unsaturated monomer;

    b. Polymerizing said first mixture in the presence of at least one polymerization initiator;
    c. Forming a second mixture comprising:

       i. at least the product obtained in the step b;
       ii. at least one surfactant;
       iii. at least one ethylenically unsaturated monomer;
       iv. optionally at least one recycled monomer;
       v. optionally at least one crosslinking functional or multi-ethylenically unsaturated monomer;

    d. Polymerizing said second mixture in the presence of at least one polymerization initiator to obtain the waterborne polymer composition;

    Wherein said recycled monomer is recycled styrene or its dimer, or its trimer, and comprises from 10 ppm to 3.000 ppm by weight of benzene.

11. Process according to claim 8, wherein the polymerization is made by multistage emulsion polymerization, said process comprising the following successive steps:

    a. Forming a first mixture comprising:

        i. water;
        ii. at least one surfactant;
        iii. at least one ethylenically unsaturated monomer;
        iv. optionally at least one recycled monomer;
        v. optionally at least one carboxyl functional monomer;
        vi. optionally at least one crosslinking functional or multi-ethylenically unsaturated monomer;

    b. Polymerizing said first mixture in the presence of at least one polymerization initiator;
    c. Forming a second mixture comprising:

        i. at least the product obtained in step b;
        ii. at least one surfactant;
        iii. at least one recycled monomer;
        iv. optionally at least one crosslinking functional or multi-ethylenically unsaturated monomer;

    d. Polymerizing said second mixture in the presence of at least one polymerization initiator to obtain the waterborne polymer composition;

Wherein said recycled monomer is recycled styrene or its dimer, or its trimer, and comprises from 10 ppm to 3.000 ppm by weight of benzene.

12. Process according to claim 8, wherein the polymerization is made by multistage emulsion polymerization, said process comprising the following successive steps:

    a. Forming a first mixture comprising:

        i. water;
        ii. at least one carboxyl functional monomer;
        iii. optionally at least one surfactant;
        iv. optionally at least one recycled monomer;
        v. optionally at least one crosslinking functional or multi-ethylenically unsaturated monomer;

    b. Polymerizing said first mixture in the presence of at least one polymerization initiator, to produce a polymeric stabilizer;
    c. Neutralizing the polymeric stabilizer with at least one neutralizing agent to a pH value in between the range from 7 to 11;
    d. Forming a second mixture comprising:

        i. at least the neutralized polymeric stabilizer obtained in step c;
        ii. at least one recycled monomer;
        iii. optionally at least one surfactant;
        iv. optionally at least one crosslinking functional or multi-ethylenically unsaturated monomer;

    e. Polymerizing said second mixture in the presence of at least one polymerization initiator to obtain the waterborne polymer composition;

Wherein said recycled monomer is recycled styrene or its dimer, or its trimer, and comprises from 10 ppm to 3.000 ppm by weight of benzene.

13. Process for producing a waterborne polymer composition by:

    - providing a polymer comprising styrene monomer unit;
    - recycling said polymer in a recycling process to obtain recycled styrene or its dimer, or its trimer that comprises from 10 ppm to 3.000 ppm by weight of benzene;
- polymerizing said at least one recycled styrene obtained in said recycling process; wherein the recycling styrene is substantially not purified during the recycling process.

14. Use of the waterborne polymer composition according to claim 1 to 7, or of the waterborne polymer composition resulting from process according to claim 8 to 13 to produce coating, paint, primer, ink, varnish, pressure sensitive adhesive, and use of said waterborne polymer composition as textile polymers in finishing, in coating, in adhesive, in flocking, or in nonwoven, or as textile auxiliaries in pretreatment, in dyeing, in printing, or in finishing, or as leather additive in wet end or in finishing, or as additive in construction, or as paper additive.

15. Coating, paint, primer, ink, pressure sensitive adhesive, or varnish made with the waterborne polymer composition according to claim 1 to 7, or of the waterborne polymer composition resulting from process according to claim 8 to 13.

Europäisches
Patentamt

European
Patent Office

Office européen
des brevets

## EUROPEAN SEARCH REPORT

**Application Number**

**EP 23 18 9870**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 316176 A (HITACHI CHEMICAL CO LTD) 24 November 2006 (2006-11-24) | 1-6, 8-11,13 | INV. C09D133/08 |
| Y | * Manufacture example 2; example 1 * | 7,12,14, 15 | C08F265/06 C08F212/08 C08F257/02 |
| Y | RU 2 615 748 C1 (PUBLICHNOE AKTSIONERNOE OBSHCHESTVO SIBUR KHOLDING [RU]) 11 April 2017 (2017-04-11) * paragraphs [0010], [0012]; example 2 * | 7,12,14, 15 | ADD. C08F2/22 |

TECHNICAL FIELDS
SEARCHED        (IPC)

C09D
C08F
C09J

The present search report has been drawn up for all claims

| Place of search | Date of completion of the search | Examiner |
|---|---|---|
| The Hague | 26 January 2024 | Jegou, Gwénaëlle |

EPO FORM 1503 03.82 (P04C01)

## ANNEX TO THE EUROPEAN SEARCH REPORT
## ON EUROPEAN PATENT APPLICATION NO.

EP 23 18 9870

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | | Publication date | Patent family member(s) | Publication date |
|---|---|---|---|---|
| JP 2006316176 | A | 24-11-2006 | NONE | |
| RU 2615748 | C1 | 11-04-2017 | NONE | |

For more details about this annex : see Official Journal of the European Patent Office, No. 12/82